(19) Europäisches Patentamt

European Patent Office

Office européen des brevets

(11) Publication number: **0 169 347 B1**

(12) **EUROPEAN PATENT SPECIFICATION**

(45) Date of publication of patent specification: **12.06.91**    (51) Int. Cl.⁵: **A23B 4/14**, A23F 3/18

(21) Application number: **85106775.1**

(22) Date of filing: **01.06.85**

(54) Composition containing tea extract.

(30) Priority: **25.07.84 US 634210**

(43) Date of publication of application:
**29.01.86 Bulletin 86/05**

(45) Publication of the grant of the patent:
**12.06.91 Bulletin 91/24**

(84) Designated Contracting States:
**AT BE CH DE FR IT LI LU NL SE**

(56) References cited:
**EP-A- 0 169 936**

**PATENT ABSTRACTS OF JAPAN, vol. 8, no.
134 (C-230)[1571], 21st June 1984; & JP-A-59
45 385 (KIYOUIKU BUNKA KENKYUSHO)
14-03-1984**

**A.M. PEARSON et al.: "Processed meats",
2nd edition, 1984, pages 48-51, Avi Publish-
ing Co., Inc., Westport, US**

(73) Proprietor: **SOCIETE DES PRODUITS NESTLE
S.A.**
**Case postale 353**
**CH-1800 Vevey(CH)**

(72) Inventor: **Mai, Jimbin**
**5, Foxburn Street**
**New City New York 10956(US)**
Inventor: **McDonald, Richard**
**10160 Bennington Drive**
**Cincinnati Ohio 45241(US)**
Inventor: **Wedral, Elaine Regina**
**RR 2, P.O. Box 480A Chestnut Hill Road**
**Sherman Conn. 06784(US)**

EP 0 169 347 B1

## Description

The present invention relates to the inhibition of the formation of N-nitrosamines in nitrite cured food products, more particularly to compositions comprising a nitrite cured food products and certain tea extracts obtained by the extraction of tea leaves at temperatures of at least 120°C.

Nitrates and nitrites have been used for a long time in the preservation of foods and even now nitrites are the most effective agents in preventing Botulinum in cured meats. However, nitrites react with secondary amines to form N-nitrosamines which are considered as potential carcinogens to consumers. International concern over the presence of nitroso compounds in foods and their formation within the alimentary system and in other parts of the environment has led not only to increasing restrictions on the use of nitrates and nitrites for food preservation but also to the search for nitrite substitutes or compounds which would inhibit the formation of N-nitrosamines. The search for nitrite substitutes has not yet been very successful but substances such as ascorbic acid (Vitamin C), $\alpha$-tocopherol (Vitamin E) and plant phenolics have been described as blocking agents to inhibit N-nitrosamine formation in cured meats. (A.M. Pearson et al.:"Processed meats" 2nd edition, 1984, pages 48-51, AVI Publishing Co., Inc., Westport, USA and H.F. Stich, P.K.L. Chan, M.P. Rosin (1982), Int.J.Cancer 30(6):719-24.

However, a disadvantage of Vitamin C is that it is not entirely heat stable at cooking temperatures as high as 180°C and thus loses its activity during cooking at such temperatures. In addition, a disadvantage of vitamin E is that it is not water-soluble and it is difficult to apply to cured meat in the curing brine.

We have found, surprisingly, that in the aqueous extraction of black tea leaves at temperatures from 120°C to 210°C, certain extracts are formed which have not only superior N-nitrosamine inhibiting activity to systems containing plant phenolics described in the literature but also have advantages over Vitamin C and Vitamin E in that they are heat stable at 180°C and extremely water soluble respectively. In addition, as described in our co-pending United States Patent Application Serial No. 561678, the tea extracts have excellent antioxidant activity.

Accordingly, the present invention provides a composition comprising a nitrite cured food product and an extract formed by the aqueous extraction of black tea leaves in a process which includes a treatment at a temperature from 120°C to 210°C, the amount of extract being such that the content of tea solids present is from 0.005% to 1.5% by weight based on the weight of food, said extract containing at least 5% by weight of polyphenols based on the weight of tea solids.

The present invention also provides a process for inhibiting the formation of N-nitrosamines in nitrite cured food products which comprises treating the food product with a nitrite curing mix and with an extract formed by the aqueous extraction of black tea leaves in a process which includes a treatment at a temperature from 120°C to 210°C, the amount of extract being such that the content of tea solids present is from 0.005% to 1.5% by weight based on the weight of food, said extract containing at least 5% by weight of polyphenols based on the weight of tea solids.

Conveniently, the tea extract is added to the nitrite curing mix before the curing process.

Food materials which may be treated in accordance with the present invention are, for example, meat products such as bacon, ham, corned beef and pepperoni sausage.

Instant tea is routinely prepared by the hot water extraction of tea leaves, for example, as described in World Coffee and Tea, April 1972, pages 54-57, "The practice of instant tea manufacture". In the present invention, similar extraction conditions used in instant tea manufacture are followed wherein at least part of the extraction of the tea leaves is carried out at a temperature of at least 120°C to obtain the tea extracts which are excellent inhibitors of the formation of N-nitrosamines in nitrite cured food products. In addition to these extracts, the spent tea leaves or residues remaining after extraction, and the instant tea powder are also excellent inhibitors. For convenience, the word "extract" used in this invention includes the instant tea powder, the spent tea leaves and residues after extraction. The concentrated extracts containing up to 15% tea solids, especially from 4% to 10% tea solids have especially good inhibiting activity.

In one particular process of making tea extract with excellent activity for inhibiting the formation of N-nitrosamines in nitrite cured food products, black tea leaves are extracted at a temperature from 80°C to 130°C to give an initial extract (Fraction I). The residual leaves are extracted at a temperature from 120°C to 210°C and centrifuged to give a second extract (Fraction II). Fraction I and Fraction II are combined and concentrated to give an approximately 5-10% tea concentrate which is cooled and the insoluble tannins separated therefrom to give a water soluble tea liquor (Fraction III). All fractions are further concentrated and dried. Preferably the tea leaves are extracted at a temperature from 100°C to 125°C and especially from 105°C to 120°C, for a period from 10 minutes to 60 minutes to give the initial extract. The residual tea leaves are then milled, slurried and extracted a second time, conveniently for a period from 5 to 60 minutes, preferably from 20 to 40 minutes, at a temperature from 130°C to 210°C preferably from 145°C to 195°C

2

more preferably from 160°C to 185°C, and especially from 165°C to 180°C. Advantageously, the extraction at the higher temperatures is carried out under pressure. After the second extraction the tea residue is removed e.g. by centrifugation to yield Fraction II. In this process, Fraction II has especially good N-nitrosamine inhibiting activity.

Excellent N-nitrosamine inhibiting activity is obtained when the amount of polyphenols is at least 6% by weight and preferably at least 8% by weight based on the weight of tea solids. Preferably the aqueous extract contains from 4% to 10% tea solids based on the weight of the extract.

The major phenolic constituents of the tea solids and the amounts of each usually present in the extracts are gallic acid (0.05 to 1.5%) epicatechin (0.01 to 0.5%), catechin (0.01 to 0.6%), epigallocatechin (0.01 to 0.75%), epicatechin gallate (0.01 to 1.00%) and epigallocatechin gallate (0.01 to 1.5%), all the amounts being given as percentages by weight based on the weight of tea solids.

The amount of extract present in the food composition of the present invention is conveniently such that the tea solids content is from 0.008 to 1.00% by weight, preferably from 0.01 to 0.75% and especially from 0.02 to 0.5% by weight based on the weight of food.

In one embodiment of the present invention, the tea extracts, especially Fraction II, may be further extracted with a water-immiscible organic solvent capable of extracting at least a part of the polyphenols from the extracts, for example, by partitioning. Examples of such solvents are petroleum ether, pentane, diethyl ether, hexane, ethyl propionate, ethyl acetate, methyl iso-butyl ketone or halogenated hydrocarbons, such as Freons. The extracted polyphenols may then be separated, for example, by removal of the solvent by rotary evaporation, and reconstituted with water and freeze-dried. Such polyphenol extracts also have significant N-nitrosamine inhibiting activity.

The following examples further illustrate the present invention.

Example 1

Black tea leaves were extracted at a temperature between 110°C and 120°C for 30 minutes to give Fraction I. The residual tea leaves were milled, slurried and then extracted at 190°C and a pressure of 11 bars for a further 30 minutes. This slurry was centrifuged and the supernatant was recovered as Fraction II.

A first sample of ham was nitrite cured in the standard manner and used as a control. A second sample of ham was cured similarly except that an amount of Fraction II was added to the nitrite curing mix so that the proportion of tea solids present in the second sample of cured ham was 2500 ppm (0.25%). The nitrite cured ham treated with Fraction II and the control nitrite cured ham were analysed for N-nitrosamine by GC-TEA (Thermal energy analyser). The results of the analyses are indicated in Table I.

## TABLE I

| Sample | N-nitrosamines in ppb and % reduction in ( ) | | | |
|---|---|---|---|---|
| | Dimethyl nitrosamine | Diethyl nitrosamine | Dipropyl nitrosamine | Dibutyl nitrosamine |
| Control | 8.53 | 1.04 | 0.47 | 18.28 |
| Treated with Fraction II | 0.53(-94%) | 0.00(-100%) | Trace(-95%) | 0.88(-95%) |

Table I clearly demonstrates that the aqueous extract of tea (Fraction II) inhibited the formation of more than 90% of the N-nitrosamines in the cured ham.

Example 2

A sample of Fraction II formed in the process described in Example 1 was made into a 3% aqueous solution to which were added two volumes of ethyl acetate to form two immiscible layers. The organic layer was collected and the procedure of extraction was repeated twice. The pooled organic layer was rotary evaporated and the residue freeze dried to give Fraction IIA. The yield was 9%.

A sample of ham was nitrite cured in a similar manner to that described in Example 1 for the ham treated with Fraction II but in which, instead of Fraction II, an amount of Fraction IIA was added to the nitrite curing mix so that the proportion of tea solids present in the resultant cured ham was 250 ppm (0.025%). The nitrite cured ham treated with Fraction IIA was analysed for N-nitrosamine by GC-TEA (thermal energy analyser). The results of the analyses together with the results for the control sample as described in Example 1 are given in Table II.

## TABLE II

| Sample | N-nitrosamines in ppb and % reduction in ( ) | | | |
|---|---|---|---|---|
| | Dimethyl nitrosamine | Diethyl nitrosamine | Dipropyl nitrosamine | Dibutyl nitrosamine |
| Control | 8.53 | 1.04 | 0.47 | 18.28 |
| Treated with Fraction IIA | 6.13 (-28%) | 0.67 (-36%) | Trace (-95%) | 5.87 (-68%) |

Table II clearly demonstrates that an ethyl acetate extract of tea (Fraction IIA) significantly inhibited the formation of N-nitrosamines in cured ham.

## Claims

1. A composition comprising a nitrite cured food product and a tea extract formed by hot aqueous extraction of black tea leaves characterised in that the extraction process includes a treatment at a temperature from 120°C to 210°C, the amount of extract being such that the content of tea solids present is from 0.005% to 1.5% by weight based on the weight of focd, said extract containing at least 5% by weight of polyphenols based on the weight of tea solids.

2. A composition according to claim 1 characterised in that in the extraction process black tea leaves are extracted at a temperature from 100°C to 125°C to give an initial extract (Fraction I), and the residual leaves are extracted at a temperature from 130°C to 210°C to give a second extract (Fraction II) which is the tea extract used.

3. A composition according to claim 1 characterised in that the aqueous extract contains from 4% to 10% tea solids by weight based on the weight of the extract.

4. A composition according to claim 1 characterised in that the amount of extract in the food is such that the tea solids content is from 0.008% to 1.00% by weight based on the weight of food.

5. A composition according to claim 1 characterised in that the tea extract is further extracted with a water-immiscible organic solvent capable of extracting at least a part of the polyphenols from the extract.

6. A composition according to claim 5 characterised in that the water-immiscible organic solvent is ethyl acetate.

7. A process for inhibiting the formation of N-nitrosamines in nitrite cured food products which comprises treating the food product with a nitrite curing mix and with an extract formed by the aqueous extraction of black tea leaves in a process which includes a treatment at a temperature from 120°C to 210°C, the amount of extract being such that the content of tea solids present is from 0.005% to 1.5% by weight based on the weight of food, said extract containing at least 5% by weight of polyphenols based on the weight of tea solids.

8. A process according to claim 7 characterised in that the tea extract is added to the nitrite curing mix before the curing process.


**Revendications**

1. Composition comprenant un produit alimentaire salé avec un nitrite et un extrait de thé formé en soumettant à une extraction par l'eau chaude de feuilles de thé noir, caractérisée en ce que le procédé d'extraction comprend un traitement à une température de 120° C à 210° C, la quantité d'extrait étant choisi de manière à ce que la teneur en substances solides du thé présentes soit de 0,005 % à 1,5% en poids, sur la base du poids du produit alimentaire, ledit extrait contenant au moins 5 % en poids de polyphénols, sur la base du poids des substances solides du thé.

2. Composition suivant la revendication 1, caractérisée en ce que, dans le procédé d'extraction, les feuilles de thé noir sont soumises à une extraction à une température de 100° C à 125° C pour obtenir un extrait initial ( fraction 1), et les feuilles résiduelles sont soumises à une extraction à une température de 130° C à 210° C pour obtenir un second extrait (fraction 2) qui est l'extrait de thé utilisé.

3. Composition suivant la revendication 1, caractérisée en ce que l'extrait aqueux contient 4% à 10% en poids de substances solides du thé, sur la base du poids de l'extrait.

4. Composition suivant la revendication 1, caractérisée en ce que la quantité de l'extrait dans le produit alimentaire est choisie de manière à ce que la teneur en substances solides du thé soit de 0,008% à 1,00% en poids, sur la base du poids du produit alimentaire.

5. Composition suivant la revendication 1, caractérisée en ce que l'extrait de thé est soumis en outre à une extraction avec un solvant organique non miscible à l'eau capable d'extraire au moins une partie des polyphénols de l'extrait.

6. Composition suivant la revendication 5, caractérisée en ce que le solvant organique non miscible à l'eau est l'acétate d'éthyle.

7. Procédé pour inhiber la formation de N-nitrosamines dans des produits alimentaires salés avec un nitrite, qui consiste à traiter le produit alimentaire avec un mélange de salage contenant un nitrite et avec un extrait formé en soumettant des feuilles du thé noir à une extraction aqueuse dans un procédé qui comprend un traitement à une température de 120° C à 210° C, la quantité d'extrait étant choisie de manière que la teneur en substances solides du thé présentes soit de 0,005% à 1,5% en poids, sur la base du poids du produit alimentaire, ledit extrait contenant au moins 5% en poids de polyphénols, sur la base du poids des substances solides du thé.

8. Procédé suivant la revendication 7, caractérisé en ce que l'extrait de thé est ajouté au mélange de salage renfermant un nitrite avant mise en oeuvre du procédé de salage.


**Ansprüche**

1. Zusammensetzung, welche ein durch Nitrit haltbar gemachtes Nahrungsmittel und einen Tee-Extrakt umfaßt, der durch Heißwasserextraktion aus den Blättern von schwarzem Tee gebildet worden ist, daß das Tee-Extraktionsverfahren eine Behandlung bei einer Temperatur von 120° C bis 210° C umfaßt, wobei die Extraktmenge eine solche ist, daß der vorhandene Gehalt an Teefeststoffen 0,005 Gew.-% bis 1,5 Gew.-% bezogen auf das Gewicht des Nahrungsmittels, beträgt, und wobei dieser Extrakt wenigstens 5 Gew.-% Polyphenole, bezogen auf das Gewicht der Teefeststoffe, enthält.

2. Zusammensetzung nach Anspruch 1, dadurch gekennzeichnet, daß in dem Extraktionsverfahren die Blätter des schwarzen Tees bei einer Temperatur von 100°C bis 125°C unter Bildung eines Anfangsextraktes (Fraktion I) extrahiert werden, und daß die zurückbleibenden Blätter bei einer Temperatur von 130°C bis 210°C unter Bildung eines zweiten Extraktes (Fraktion II) extrahiert werden, welches der verwendete Tee-Extrakt ist.

3. Zusammensetzung nach Anspruch 1, dadurch gekennzeichnet, daß der wässerige Extrakt 4 Gew.-% bis 10 Gew.-% Teefeststoffe, bezogen auf das Gewicht des Extraktes, enthält.

4. Zusammensetzung nach Anspruch 1, dadurch gekennzeichnet, daß die Menge an Extrakt in dem Nahrungsmittel eine soloche ist, daß der Gehalt an Teefeststoffen 0,008 Gew.-% bis 1,00 Gew.%, bezogen auf das Gewicht des Nahrungsmittels, beträgt.

5. Zusammensetzung nach Anspruch 1, dadurch gekennzeichnet, daß der Tee-Extrakt noch weiter mit einem mit Wasser nicht mischbaren organischen Lösungsmittel extrahiert wird, welches befähigt ist, wenigstens einen Teil der Polyphenole aus dem Extrakt zu extrahieren.

6. Zusammensetzung nach Anspruch 5, dadurch gekennzeichnet, daß das mit Wasser nicht mischbare organische Lösungsmittel Ethylacetat ist.

7. Verfahren zum Hemmen der Bildung von N-Nitrosaminen in mit Nitrit haltbar gemachten Nahrungsmitteln, welches das Behandeln des Nahrungsmittels mit einem das Nitrit enthaltenden Haltbarmachungsgemisch und mit einem Extrakt umfaßt, welcher Extrakt durch wässerige Extraktion von Blättern schwarzen Tees in einem Verfahren gebildet worden ist, welches eine Behandlung bei einer Temperatur von 120°C bis 210°C umfaßt, wobei die Extraktmenge eine solche ist, daß der vorhandene Gehalt an Teefeststoffen 0,005 Gew.-% bis 1,5 Gew.-%, bezogen auf das Gewicht des Nahrungsmittels, beträgt, und wobei dieser Extrakt wenigstens 5 Gew.-% Polyphenole, bezogen auf das Gewicht an Teefeststoffen, enthält.

8. Verfahren nach Anspruch 7, dadurch gekennzeichnet, daß der Tee-Extrakt zu dem das Nitrit enthaltenden Haltbarmachungsgemisch noch vor dem Haltbarmachungsverfahren zugesetzt wird.